# EUROPÄISCHE PATENTSCHRIFT

(11) **EP 1 436 156 B1**
(45) Veröffentlichungstag und Bekanntmachung des Hinweises auf die Patenterteilung: **02.03.2005**
(21) Anmeldenummer: 02782947.2
(22) Anmeldetag: 18.10.2002
(51) Int. Cl.: B60J 7/00, H01L 31/048, B29C 44/12

(54) **GLASDECKEL FÜR EIN FAHRZEUGDACH SOWIE HERSTELLUNGSVERFAHREN DAFÜR**
GLASS COVER FOR A VEHICLE ROOF AND PRODUCTION METHOD THEREFOR
PANNEAU EN VERRE POUR UN TOIT DE VEHICULE ET PROCEDE DE FABRICATION ASSOCIE

(30) Priorität: 19.10.2001 DE 10151156
(43) Veröffentlichungstag der Anmeldung: 14.07.2004
(73) Patentinhaber: Webasto Vehicle Systems International GmbH, 82131 Stockdorf (DE)
(72) Erfinder: PAETZ, Werner, 86928 Hofstetten (DE); VILSMAYER, Sven, 82152 Krailling (DE)
(74) Vertreter: Wiese, Gerhard
(86) Internationale Anmeldenummer: PCT/EP2002/011654
(87) Internationale Veröffentlichungsnummer: WO 2003/041980

(56) Entgegenhaltungen:
- EP-A- 0 901 918
- DE-A- 4 105 396
- DE-A- 4 323 140
- DE-C- 19 911 811

## Beschreibung

Die vorliegende Erfindung betrifft einen Glasdeckel für ein Fahrzeugdach gemäß dem Oberbegriff des Anspruchs 1 sowie ein Verfahren zur Herstellung eines solchen, gemäß dem Oberbegriff des Anspruchs 14.

Ein zusätzlich mit Solarzellen versehener Glasdeckel gemäß dem Oberbegriff des Anspruchs 1 ist beispielsweise aus der DE 43 23 140 A1 bekannt. Eine Abdekkung an der Unterseite ist mit einem sehr schmalen Randbereich in einen Einfaßrahmen eingeschäumt, so dass beim Zerbrechen der Glasscheibe die Abdeckung mit den Glassplittem in den Fahrzeuginnenraum fallen kann.

Es ist Aufgabe der vorliegenden Erfindung, einen Glasdeckel mit oder ohne Solarfunktion für ein Fahrzeugdach zu schaffen, welcher einen möglichst guten Schutz der Insassen und des Fahrzeuginnenraums bei Bruch des Glasdeckels bietet und dennoch einfach herzustellen ist. Ferner soll ein entsprechendes Herstellungsverfahren geschaffen werden.

Diese Aufgabe wird erfindungsgemäß gelöst durch einen Glasdeckel mit den im Anspruch 1 genannten Merkmalen sowie durch ein entsprechendes Verfahren gemäß Anspruch 14. Bei diesen erfindungsgemäßen Lösungen ist vorteilhaft, dass bei Bruch der Glasscheibe einerseits die Splitter der gebrochenen Glasscheibe an dem Schutzfolienverbund hängen bleiben und andererseits dadurch, dass der Schutzfolienverbund im Randbereich fest mit der Trägeranordnung verbunden ist, wobei der Schutzfolienverbund zwar nicht mehr biegesteif ist, aber wie ein an den Rändern fest eingespanntes Auffangnetz an Ort und Stelle in dem Deckel gehalten wird. Auf diese Weise kann verhindert werden, dass Glassplitter in den Fahrzeuginnenraum gelangen, dass Insassen durch die gebrochene Scheibe nach außen geschleudert werden, dass Gegenstände von außen durch die gebrochene Scheibe in den Innenraum eindringen können oder der Innenraum bei Zerstörung der Glasscheibe im Falle eines Einbruchs frei zugänglich wird.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- FIG. 1: einen Schnitt durch den seitlichen Randbereich eines erfindungsgemäßen Glasdeckels;
- FIG. 2: eine Ansicht des bei der Deckelherstellung verwendeten Folienverbunds;
- FIG. 3: einen Schnitt ähnlich Fig. 1 vor dem Ankleben des Folienverbunds und dem Umschäumen; und
- FIG. 4: eine Ansicht ähnlich zu FIG. 1, wobei jedoch eine Ausführungsform eines mit Solarzellen versehenen Glasdeckels gezeigt ist.

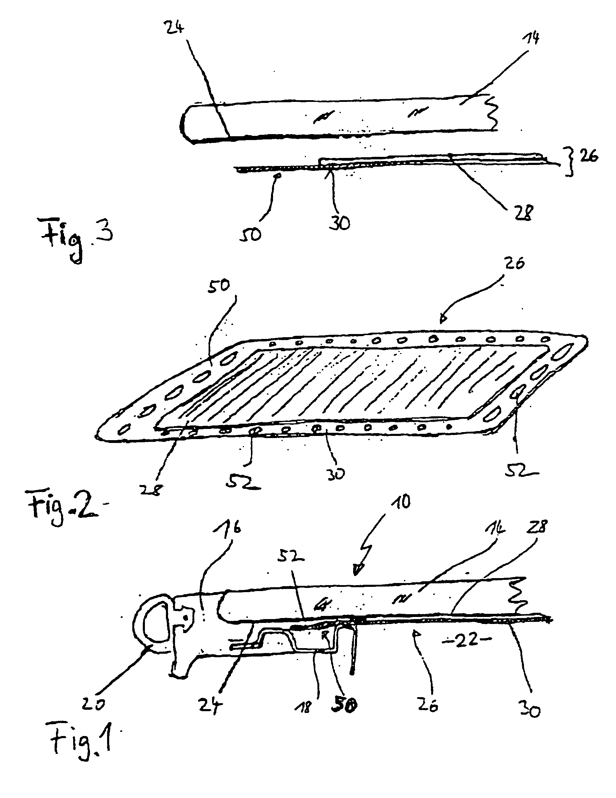

in FIG. 1 ist eine erste Ausführungsform eines Glasdeckels 10 dargestellt, welcher zum Verschließen bzw. wahlweisen Freigeben einer Öffnung in einer festen Dachhaut vorgesehen ist. Es kann sich dabei beispielsweise um den Deckel eines Schiebedaches, Schiebehebedaches, Ausstelldaches oder Spoilerdaches oder auch um eine feste Dachscheibe handeln. Der Glasdeckel 10 umfasst eine transparente Glasscheibe 14, die in ihrem Randbereich mit einer umlaufenden Umschäumung 16 (beispielsweise aus Polyurethanschaum) versehen ist, mittels der vorzugsweise eine beispielsweise als Deckelinnenblech ausgebildete Trägeranordnung 18 im Randbereich der Scheibe 14 an deren Unterseite befestigt wird. Das Deckelinnenblech 18 dient als Trägeranordnung für die Glasscheibe 14, um diese mit einer Verstellmechanik (nicht dargestellt) für den Deckel 10 zu verbinden. Am Außenumfang der Umschäumung 16 ist eine Dichtung 20 vorgesehen, um bei geschlossenem Deckel 10 das Eindringen von Feuchtigkeit in den Fahrzeuginnenraum 22 zu verhindern. Ferner ist im Randbereich der Scheibe 14 an der Unterseite im Bereich der Umschäumung 16 bzw. des Deckelinnenblechs 18 eine Glasfritte 24 beispielsweise in Form einer Bedruckung vorgesehen, die als nicht-transparenter Sichtschutz dient, um die Umschäumung 16 und das Dekkelinnenblech 18 von oben abzudecken.

Die Glasscheibe 14 ist vorzugsweise aus thermisch vorgespanntem Einscheiben-Sicherheitsglas (ESG) ausgebildet.

In ihrem zentralen, transparenten Bereich ist die Scheibe 14 an ihrer Unterseite mit einem Folienverbund 26 laminiert bzw. verklebt, wobei sich dieser zentrale Bereich bis an den inneren Rand der Glasfritte 24 erstreckt. Der Folienverbund 26 ist an seiner Oberseite, d.h. an der der Scheibe 14 zugewandten Seite, mit einer Klebefolie bzw. Klebeschicht 28 versehen, welche dazu dient, eine darunter liegende Schutzfolie 30 mit der Scheibe 14 in deren zentralen Bereich zu verkleben. Die Schutzfolie 30 ist reißfest und kratzfest ausgebildet. Der Folienverbund 26 ist hinsichtlich seiner Grundfläche kleiner als die Glasscheibe 14, jedoch größer als deren zentraler transparenter Bereich.

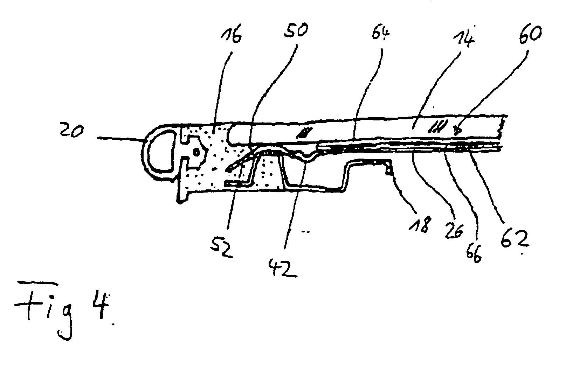

Das Deckelinnenblech 18 ist mittels der Umschäumung 16 an der Glasscheibe 14 angeschäumt. Der Randbereich 50 des Folienverbunds 26, der mit zahlreichen Perforationen 52 versehen ist, ist mit in die Umschäumung 16 eingeschäumt. Beim Umschäumen tritt die Schaummasse durch die Perforationen 52 hindurch und bettet dadurch den Folienverbund 26 stoffschlüssig und unlösbar in die Umschäumung 16 ein. Zwischen dem Randbereich 50 und dem mit dem Zentralbereich der Scheibe 14 verklebten Bereich des Folienverbunds 26 ist vorzugsweise eine Zugentlastungsfalte 42 (Fig. 4) vorgesehen, welche unter anderem verhindert, dass die Klebeverbindung des Folienverbunds 26 im zentralen Bereich der Glasscheibe 14 durch die Befestigung des Randbereichs 50 an der Umschäumung 16 auf Zug belastet wird, wenn sich der Deckel 10 beispielsweise durch bei einer Hochgeschwindigkeitsfahrt auftretenden Kräfte elastisch verformt. Auf diese Weise kann die Lebensdauer des Deckels 10 erhöht werden.

Eine Vorfixierung oder zusätzliche Fixierung des Randbereichs des Folienverbunds 26 kann mittels einer Schraubverbindung oder auch auf andere mechanische Weise, z.B. mittels einer Klemmverbindung, an dem Deckelinnenblech 18 erfolgen.

Die beschriebene Konstruktion dient dazu, sicherzustellen, dass auch bei Bruch der Glasscheibe 14 eine gewisse mechanische Integrität des Deckels 10 erhalten bleibt, indem der Folienverbund 26 auch bei zerbrochener Scheibe 14 in seinem Randbereich 50, mit dem von der Umschäumung 16 und dem Deckelinnenblech 18 gebildeten Decke/rahmen, der auch bei zerbrochener Glasscheibe 14 erhalten bleibt, aufgespannt bleibt. Dabei verliert der Folienverbund 26 zwar seine Biegesteifigkeit, verbleibt jedoch in dem Deckel 10 an Ort und Stelle und kann dadurch verhindern, dass einerseits Insassen durch die zerbrochene Scheibe 14 nach außen geschleudert werden und dass andererseits Splitter der Scheibe 14 oder Gegenstände von außen in den innenraum 22 eindringen können. Ferner sorgt der Folienverbund 26 im Falle mutwilliger Zerstörung der Glasscheibe 14 auch für einen gewissen Einbruchsschutz. Die Splitter der zerbrochenen Glasscheibe 14 bleiben aufgrund der Klebewirkung der Klebefolie 28 an dem Folienverbund 26 hängen.

Gemäß FIG. 2 ist der klebefolienfreie Randbereich 50 mit Perforationen bzw. Öffnungen 52 versehen, die im wesentlichen regelmäßig über den Randbereich 50 verteilt sind.

Ausgehend von dem in FIG. 3 gezeigten Zustand wird zunächst der Folienverbund 26 in dem zentralen Bereich der Glasscheibe 14 mittels der Klebeschicht 28 an der Scheibenunterseite angeklebt. Der klebefolienfreie Randbereich 50 geht dabei keine Verbindung mit der Glasscheibe 14 ein. Anschließend wird die so mit dem Folienverbund 26 verklebte Glasscheibe 14 in einem üblichen Schäumwerkzeug mit einem geeigneten Material, beispielsweise Polyurethan, umschäumt, um das Deckelinnenblech 18 an der Glasscheibe 14 zu befestigen, wobei das Schäummaterial durch die Perforationen 52 gelangt. Auf diese Weise wird die Schutzfolie 30 in der Umschäumung 16 verankert.

Dabei kann die Verankerung der Schutzfolie 30 durch eine mechanische Befestigung des Randbereichs 50 des Folienverbunds 26 amDeckelinnenblech 18 zusätzlich verstärkt werden.

Bei der Klebefolie handelt es sich vorzugsweise um einen Polyvinylbutyral-Film (PVB-Film) oder um eine transparente Polyurethan- Folie (PU-Folie), während es sich bei der Schutzfolie 30 vorzugsweise um eine kratzfest beschichtete Kunststofffolie, vorzugsweise eine mit Polysiloxan beschichtete Polyethylenterephthalat-Folie (PET-Folie), handelt.

In FIG. 4 ist eine Ausführungsform gezeigt, bei welcher das oben beschriebene Sicherheitskonzept auf Solardeckel angewendet ist, wobei die Unterseite der Glasscheibe 14 mit einem Solarzellenfolienverbund 60 versehen ist, welcher eine Mehrzahl von elektrisch miteinander verbundenen Solarzellen 62 aufweist, die zwischen zwei Schmelzklebefolien 64 und 66, vorzugsweise aus Ethylen-Vinylacetat-Copolymer (EVA) , angeordnet sind. Der Solarzeltenfolienverbund 60 ist dabei mittels der oberen Schmelzklebefolie 64 an der Unterseite der Glasscheibe 14 angebracht. Der Schutzfolienverbund 26 ist mittels der Klebefolie 28 an der unteren Schmelzklebefolie 66 an dem Solarzellenfolienverbund 60 und damit an der Glasscheibe 14 befestigt.

In dem klebefolienfreien Randbereich 50 ist der Schutzfolienverbund 26 wie bei der Ausführungsform gemäß FIG. 1 bis 3 mittels der Perforationen 52 in der Umschäumung 16 verankert. Dabei ist zwischen dem in der Umschäumung 16 verankerten Bereich und dem mit dem Solarzellenfolienverbund 60 verklebten Bereich des Schutzfolienverbunds 26 eine Entlastungsfalte 42 vorgesehen, um eine Delamination bei intakter Scheibe 14 aufgrund einer Zugbelastung der Klebeverbindung zwischen dem Schutzfolienverbund 26 und dem Solarzellenfolienverbund 60, die aufgrund der Verankerung des Bereichs 50 des Schutzfolienverbunds 26 in der Umschäumung 16 entstehen könnte, zu verhindern.

Bei Bruch der Glasscheibe 14 verhindert der in der Umschäumung 16 verankerte Schutzfolienverbund 26 ein Heraus- bzw. Hineinfallen der Scheibensplitter und des Sofarzeilenfolienverbunds 60 und schützt somit insbesondere den Fahrzeuginnenraum und die Fahrzeuginsassen.

Bei einer abgewandelten Ausführungsform kann die untere Schmelzklebefolie 66 des Solarzellenfolienverbunds 60 entfallen, so dass die Klebefolie 28 des Schutzfolienverbunds 26 direkt mit den Solarzellen 62 bzw. der oberen Schmelzklebefolie 64 des Solarzellenfolienverbunds 60 verklebt ist.

### Bezugszeichenliste

- 10: Glasdeckel
- 14: Glasscheibe
- 16: Umschäumung
- 18: Trägeranordnung (Deckelinnenblech)
- 20: Dichtung
- 22: Fahrzeuginnenraum
- 24: Glasfritte
- 26: Folienverbund
- 28: Klebefolie
- 30: Schutzfolie
- 42: Entlastungsfalte
- 50: (klebefotienloser) Randbereich von 26
- 52: Perforationen in 50
- 60: Solarzellenfolienverbund
- 62: Solarzellen
- 64, 66: Schmelzklebefolien von 60

## Patentansprüche

1. Glasdeckel für ein Fahrzeugdach,
• mit einer zumindest zum Teil transparenten Scheibe (14) aus Sicherheitsglas
• mit einer Trägeranordnung (18), die im Randbereich der Scheibe (14) mittels einer Umschäumung (16) an der Unterseite der Scheibe (14) angebracht ist,
• mit einem an der Unterseite der Scheibe (14) angeordneten transparenten Folienverbund (26, 60),
• der eine Klebefolie (28) und eine reißfeste und kratzfeste Splitter-Schutzfolie (30) umfasst,
• wobei die Schutzfolie (30) mittels der Klebefolie im zentralen Bereich der Scheibe (14) an der Unterseite der Scheibe (14) angeklebt ist und
• und im Randbereich der Scheibe (14) in die Umschäumung (16) eingeschäumt ist,
**dadurch gekennzeichnet, dass**
• der Folienverbund (26, 60) in einem Randbereich (50) mit Perforationen (52) für den Durchtritt von Umschäumungsmasse (16) versehen ist.

2. Glasdeckel nach Anspruch 1, **dadurch gekennzeichnet, dass** der Randbereich (50) des Fotienverbunds (26) bezüglich des verklebten Bereichs zugbelastungsfrei befestigt ist, indem eine Entlastungsfalte (42) zwischen dem verklebten Bereich und dem Randbereich (50) vorgesehen ist.

3. Glasdeckel nach Anspruch 1 oder 2, **dadurch gekennzeichnet, dass** die Glasscheibe (14) in ihrem Randbereich insbesondere durch eine bedruckte Glasfritte (24) nicht-transparent ausgebildet ist und die Umschäumung (16), die Trägeranordnung (18) und der Randbereich (50) des Folienverbunds (26) unterhalb des nicht-transparenten Bereichs (24) angeordnet sind.

4. Glasdeckel nach einem der vorhergehenden Ansprüche, **dadurch gekennzeichnet, dass** der Randbereich (50) des Folienverbunds (26) nicht mit der Klebefolie (28) versehen ist.

5. Glasdeckel nach einem der vorhergehenden Ansprüche, **dadurch gekennzeichnet, dass** es sich bei der Klebefolie (28) um einen Polyvinylbutyral-Film (PVB-Film) oder um eine Polyurethan-Folie (PU-Folie) handelt.

6. Glasdeckel nach einem der vorhergehenden Ansprüche, **dadurch gekennzeichnet, dass** es sich bei der Splitter-Schutzfolie (30) um eine mit einem kratzfesten Lack beschichtete Kunststofffolie handelt.

7. Glasdeckel nach Anspruch 7, **dadurch gekennzeichnet, dass** es sich bei der Splitterschutzfolie (30) um eine Polyethylenterephtalat-Folie (PET-Folie) handelt.

8. Glasdeckel nach Anspruch 6 oder 7, **dadurch gekennzeichnet, dass** die Splitterschutzfolie (30) mit Polysiloxan beschichtet ist

9. Glasdeckel nach einem der vorhergehenden Ansprüche, **dadurch gekennzeichnet, dass** die Trägeranordnung als Deckelinnenblech (18) ausgebildet ist.

10. Glasdeckel nach einem der vorhergehenden Ansprüche, **dadurch gekennzeichnet, dass** der Folienverbund (26) an der Trägeranordnung (18) befestigt ist.

11. Glasdeckel nach einem der vorhergehenden Ansprüche, **dadurch gekennzeichnet, dass** die Scheibe (14) aus Einscheibensicherheitsglas besteht.

12. Glasdeckel nach einem der vorhergehenden Ansprüche, **dadurch gekennzeichnet, dass** in den Folienverbund (26, 60) wenigstens eine Solarzelle (62) integriert ist.

13. Glasdeckel nach Anspruch 12, **dadurch gekennzeichnet, dass** wenigstens eine Schmelzklebefolie (64, 66), vorzugsweise aus Ethylen-Vinylaceat-Copolymer (EVA), zur Einbettung der Solarzelle(n) (62) in den Folienverbund (26, 60) vorgesehen ist.

14. Verfahren zum Herstellen eines Glasdeckels (10) für ein Fahrzeugdach, mit folgenden Verfahrensschritten:
• Ankleben eines eine Klebefolie (28) und eine reißfeste und kratzfeste Splitter-Schutzfolie (30) aufweisenden transparenten Folienverbundes (26) in einem zentralen Bereich an der Unterseite einer mindestens zum Teil transparenten Scheibe (14) aus Sicherheitsglas mittels der in diesem zentralen Bereich vorgesehenen Klebefolie (28),
• Einbetten eines Randbereiches (50), der die reißfeste und kratzfeste Splitter-Schutzfolie (30), jedoch keine Klebefolie (28) aufweist, in eine an der Unterseite der Scheibe (14) in ihrem Randbereich eingebrachte Umschäumung (16), **dadurch gekennzeichnet, daß**
• der klebefolienfreie Randbereich (50) des Folienverbunds (26) mittels dort vorgesehener Perforationen (52) für den Durchtritt von Umschäumungsmasse in der Umschäumung (16) verankert wird.

15. Verfahren nach Anspruch 14, **dadurch gekennzeichnet, dass** in die Umschäumung (16) zusätzlich eine Trägeranordnung (18) für die Scheibe (14) eingebettet wird und an dieser vor dem Schäumvorgang eine Fixierung des Folienverbunds (26) erfolgt.

16. Verfahren nach Anspruch 14 oder 15, **dadurch gekennzeichnet, dass** in den Folienverbund (26, 60) wenigstens eine Solarzelle (62) integriert wird.

## Claims

1. Glass cover for a vehicle roof,
• having an at least partly transparent pane (14) of safety glass,
• having a carrier arrangement (18) which, in the edge region of the pane (14), is attached to the underside of the pane (14) by means of peripheral foam (16),
• having a transparent film composite (26, 60) arranged on the underside of the pane (14),
• which comprises an adhesive film (28) and a tear-resistant and scratch-resistant anti-fragment film (30),
• the protective film (30) being adhesively bonded to the underside of the pane (14) in the central region of the pane (14) by means of the adhesive film, and
• being foamed into the peripheral foam (16) in the edge region of the pane (14),
**characterized in that**
• in an edge region (50), the film composite (26, 60) is provided with perforations (52) for the passage of peripheral foam compound (16).

2. Glass cover according to Claim 1, **characterized in that** the edge region (50) of the film composite (26) is fixed so as to be free of tensile loading with respect to the adhesively bonded region, by a strain-relief fold (42) being provided between the adhesively bonded region and the edge region (50).

3. Glass cover according to Claim 1 or 2, **characterized in that,** in its edge region, the glass pane (14) is designed to be non-transparent, in particular by means of a printed glass frit (24), and the peripheral foam (16), the carrier arrangement (18) and the edge region (50) of the film composite (26) are arranged underneath the non-transparent region (24).

4. Glass cover according to one of the preceding claims, **characterized in that** the edge region (50) of the film composite (26) is not provided with the adhesive film (28).

5. Glass cover according to one of the preceding claims, **characterized in that** the adhesive film (28) is a polyvinyl butyral film (PVB film) or a polyurethane film (PU film).

6. Glass cover according to one of the preceding claims, **characterized in that** the anti-fragment film (30) is a plastic film coated with a scratch-resistant varnish.

7. Glass cover according to Claim 7, **characterized in that** the anti-fragment film (30) is a polyethylene terephthalate film (PET film).

8. Glass cover according to Claim 6 or 7, **characterized in that** the anti-fragment film (30) is coated with polysiloxane.

9. Glass cover according to one of the preceding claims, **characterized in that** the carrier arrangement is formed as an inner cover plate (18).

10. Glass cover according to one of the preceding claims, **characterized in that** the film composite (26) is fixed to the carrier arrangement (18).

11. Glass cover according to one of the preceding claims, **characterized in that** the pane (14) consists of single-pane safety glass.

12. Glass cover according to one of the preceding claims, **characterized in that** at least one solar cell (62) is integrated into the film composite (26, 60).

13. Glass cover according to Claim 12, **characterized in that** at least one hot-melt adhesive film (64, 66), preferably of ethylene-vinyl acetate copolymer (EVA), is provided in order to embed the solar cell(s) (62) in the film composite (26, 60).

14. Method for producing a glass cover (10) for a vehicle roof, having the following method steps:
• adhesively bonding a transparent film composite (26) having an adhesive film (28) and a tear-resistant and scratch-resistant anti-fragment film (30) in a central region to the underside of an at least partly transparent pane (14) of safety glass by means of the adhesive film (28) provided in this central region,
• embedding an edge region (15), which has the tear-resistant and scratch-resistant anti-fragment film (30) but no adhesive film (28), in peripheral foam (16) introduced on the underside of the pane (14) in the edge region of the latter,
**characterized in that**
• the edge region (50) of the film composite (26) that is free of adhesive film is anchored in the peripheral foam (16) by means of perforations (52) provided there for the passage of peripheral foam compound.

15. Method according to Claim 14, **characterized in that** a carrier arrangement (18) for the pane (14) is additionally embedded in the peripheral foam (16), and the film composite (26) is fixed to the said carrier arrangement (18) before the foaming operation.

16. Method according to Claim 14 or 15, **characterized in that** at least one solar cell (62) is integrated into the film composite (26, 60).

## Revendications

1. Panneau ou couvercle en verre pour toit de véhicule,
- comportant une vitre (14) au moins en partie transparente, en verre de sécurité,
- comportant une structure de support (18) qui est appliquée dans la zone de bordure de la vitre (14) au moyen d'une garniture en mousse enveloppante (16), sur la face inférieure de la vitre (14) ;
- comportant une feuille composite (26, 60) transparente disposée sur la face inférieure de la vitre (14) ;
- comportant une feuille de collage adhésive (28) et une feuille protectrice anti-débris (30) résistante à la rupture et résistante aux rayures,
- la feuille protectrice (30) étant collée au moyen de la feuille de collage dans la zone centrale de la vitre (14), au niveau de la face inférieure de la vitre (14), et
- étant introduite par moussage dans la zone de bordure de la vitre (14), dans la garniture en mousse enveloppante (16),
**caractérisé en ce que**
la feuille composite (26, 60) est munie dans une zone de bordure (50) de perforations (52) permettant le passage de la masse de garniture en mousse enveloppante (16).

2. Panneau en verre selon la revendication 1, **caractérisé en ce que** la zone de bordure (50) de la feuille composite (26) est fixée sans charge de traction vis-à-vis de la zone collée, **en ce qu'**un pli de décharge (42) est prévu entre la zone collée et la zone de bordure (50).

3. Panneau en verre selon la revendication 1 ou 2, **caractérisé en ce que** la vitre de verre (14) est exécutée dans sa zone de bordure d'une façon non transparente, en particulier par une fritte de verre imprimée (24), et **en ce que** la garniture en mousse enveloppante (16), la structure de support (18) et la zone de bordure (50) de la feuille composite (26) sont disposées sous la zone non transparente (24).

4. Panneau en verre selon l'une des revendications précédentes, **caractérisé en ce que** la zone de bordure (50) de la feuille composite (26) n'est pas munie de la feuille de collage (28).

5. Panneau en verre selon l'une des revendications précédentes, **caractérisé en ce qu'**il s'agit concernant la feuille de collage (28) d'un film de polyvinylbutyral (film PVB) ou d'une feuille de polyuréthane (feuille PU).

6. Panneau en verre selon l'une des revendications précédentes, **caractérisé en ce qu'**il s'agit pour ce qui est de la feuille protectrice anti-débris (30) d'une feuille en matière plastique ou synthétique enduite de laque résistante aux rayures.

7. Panneau en verre selon la revendication 7, **caractérisé en ce qu'**il s'agit concernant la feuille protectrice anti-débris (30) d'une feuille de téréphtalate de polyéthylène (feuille PET).

8. Panneau en verre selon la revendication 6 ou 7, **caractérisé en ce que** la feuille protectrice anti-débris (30) est enduite de polysiloxane.

9. Panneau en verre selon l'une des revendications précédentes, **caractérisé en ce que** la structure de support est exécutée en tant que plaque intérieure de panneau (18).

10. Panneau en verre selon l'une des revendications précédentes, **caractérisé en ce que** la feuille composite (26) est fixée sur la structure de support (18).

11. Panneau en verre selon l'une des revendications précédentes, **caractérisé en ce que** la vitre (14) se compose d'un verre de sécurité trempé.

12. Panneau en verre selon l'une des revendications précédentes, **caractérisé en ce qu'**au moins une cellule solaire (62) est intégrée dans la feuille composite (26, 60).

13. Panneau en verre selon la revendication 12, **caractérisé en ce qu'**au moins une feuille de collage par fusion (64, 66), de préférence en copolymère d'éthylène-acétate de vinyle (EVA), est prévue pour incorporer la ou les cellules solaires (62) dans la feuille composite (26, 60).

14. Procédé de fabrication d'un panneau en verre (10) pour un toit de véhicule, qui comprend les étapes de procédé suivantes :
- collage d'une feuille composite (26) transparente, présentant une feuille de collage (28) et une feuille protectrice anti-débris (30) résistante à la rupture et résistante aux rayures, dans une zone centrale, au niveau de la face inférieure d'une vitre (14) au moins en partie transparente, composée d'un verre de sécurité, au moyen de la feuille de collage (28) prévue dans cette zone centrale,
- incorporation d'une zone de bordure (50) qui présente la feuille protectrice anti-débris (30) résistante à la rupture et résistante aux rayures mais pas de feuille de collage (28), dans une garniture en mousse enveloppante (16) appliquée au niveau de la face inférieure de la vitre (14), dans sa zone de bordure,
**caractérisé en ce que**
la zone de bordure (50) de la feuille composite (26) exempte de feuille de collage est ancrée dans la garniture en mousse enveloppante (16) au moyen des perforations qui y sont prévues (52) pour le passage de la masse de garniture en mousse.

15. Procédé selon la revendication 14, **caractérisé en ce qu'**une structure de support (18) pour la vitre (14) est de plus incorporée dans la garniture en mousse enveloppante (16) et que se produit à ce niveau une fixation de la feuille composite (26) avant le procédé de moussage.

16. Procédé selon la revendication 14 ou 15, **caractérisé en ce qu'**au moins une cellule solaire (62) est intégrée dans la feuille composite (26, 60).
